# FASCICULE DE BREVET EUROPEEN

(11) **EP 1 886 945 B1**
(45) Date de publication et mention de la délivrance du brevet: **23.09.2009**
(21) Numéro de dépôt: 07301299.9
(22) Date de dépôt: 08.08.2007
(51) Int. Cl.: B65G 47/14, B65G 47/24, B65G 17/12

(54) **Procédé et dispositif de distribution contrôlée d'objets en vrac**
Verfahren und Vorrichtung zur kontrollierten Verteilung von Schüttgut
Method and device for controlled distribution of objects in bulk

(30) Priorité: 10.08.2006 FR 0653348
(43) Date de publication de la demande: 13.02.2008
(73) Titulaire: P K B, 27220 Prey (FR)
(72) Inventeur: Damois, Sylvain, 78770 Thoiry (FR)
(74) Mandataire: Catherine, Alain

(56) Documents cités:
- WO-A-99/58433
- DE-C- 893 028

## Description

La présente invention concerne un procédé et un dispositif de distribution contrôlée d'objets introduits en vrac. Elle a des applications dans le domaine de l'emballage et plus particulièrement dans les chaînes automatisées de mise en flacons de produits à appliquer (type mascara, vernis à ongles, crèmes solaires ou autres) ou à pulvériser (type parfum, eau de toilette ou autres), que ce soit des cosmétiques, parfums, médicaments ou autres. Dans le cadre de l'invention, les objets sont notamment des moyens de pulvérisation ou des applicateurs destinés à être placés sur un flaconnage.

On connaît déjà des dispositifs de distribution d'objets mettant en oeuvre un bol vibrant qui comporte des moyens permettant d'orienter correctement des objets au cours de la progression de ceux-ci le long d'un parcours dans ledit bol vibrant, vers une sortie dudit bol. On peut par exemple citer la demande FR06/50658 déposée le 24 février 2006. Pour cela, on utilise l'asymétrie des objets, que ce soit la forme et/ou le centre de gravité, afin qu'une orientation déterminée de l'objet soit plus stable que d'autres lors du parcours. Bien que fonctionnel et relativement économique du fait de sa simplicité, ce type de dispositif présente certains inconvénients et, notamment, que plus le parcours est long plus il y a un risque de détériorer l'aspect extérieur des objets du fait des frottements et vibrations. De plus l'adaptation du bol vibrant à des objets de taille et structure différente peut s'avérer complexe.

Il a également été proposé dans WO99/58433 de mettre en oeuvre des moyens dans lesquels les objets sont orientés par des guides mobiles entraînés par une première chaîne et provoquant le basculement des objets glissant vers des logements se déplaçant sous l'action d'une seconde chaîne, les mouvements synchrones des deux chaînes se faisant dans des plans perpendiculaires entre-eux. Ici encore, certains inconvénients sont présents comme notamment la complexité de mettre en oeuvre deux chaînes synchrones dans des plans perpendiculaires et la nécessité d'une adaptation parfaite entre la partie avec les logements et la partie avec les guides, qui sont deux parties indépendantes chacune sur sa chaîne, pour éviter des coincements ou, alors, des écarts dans lesquels des objets pourraient se prendre.

La présente solution qui propose notamment de résoudre les problèmes précédents, évite d'avoir à mettre en oeuvre des ensembles synchronisés avec moyens mobiles de basculement des objets et utilise en outre la simplicité des moyens vibrants pour pré-orienter les objets. Elle consiste notamment à réceptionner des objets tombant dans des godets et à ne retenir dans les godets que les objets correctement positionnés. Elle consiste également à utiliser la tendance naturelle d'un objet allongé à centre de gravité décalé par rapport à son milieu, ici des objets comportant une tête se prolongeant par une queue, la tête étant plus large que la queue et le centre de gravité étant décalé vers la tête, à tomber la tête la première à partir d'une position sensiblement horizontale (ou légèrement inclinée).

Ainsi, l'invention concerne un procédé de distribution contrôlée d'objets introduits en vrac, les objets étant des pièces allongées dans une direction dite longueur et à deux extrémités opposées, dont le centre de gravité est décentré dans la longueur et présentant une première extrémité de tête plus large qu'une seconde extrémité de queue plus mince (plus généralement, l'objet présente donc un épaulement), le centre de gravité étant décalé vers la tête, dans lequel on oriente individuellement chaque objet par chute dans un moyen de transport, la tête de l'objet tombant la première dans le moyen de transport qui est ouvert vers le haut dans une zone de réception, puis retournement de l'objet, le moyen de transport étant retourné dans une zone de retournement, puis extraction de l'objet de son moyen de transport dans une zone d'extraction.

Selon l'invention de procédé, le moyen de transport est un godet et on met en oeuvre un ensemble de godets, on solidarise les godets à un moyen d'entraînement en boucle et on guide l'objet dans sa chute par un entonnoir disposé dans l'axe de l'ouverture du godet, chacun des godets ayant un entonnoir correspondant et les entonnoirs étant solidaires dudit même moyen d'entraînement en boucle.

Dans divers modes de mise en oeuvre de l'invention de procédé, les moyens suivants pouvant être utilisés seuls ou selon toutes les combinaisons techniquement possibles, sont employés :
- le diamètre général de la tête de l'objet est supérieur au diamètre du reste de l'objet,
- le centre de gravité de l'objet se trouve au niveau de la tête,
- les objets sont des applicateurs de mascara ou de vernis à ongles,
- les objets sont des applicateurs, la tête est un bouchon et la queue un pinceau à mascara ou à vernis à ongles,
- les objets sont des moyens de pulvérisation,
- les objets sont des moyens de pulvérisation, la tête est équipée ou non d'un poussoir et la queue est une tigelle, ledit moyen de pulvérisation pouvant comporter une pompe,
- les objets sont des pompes-échantillons,
- on fait tomber la tête la première des objets par un moyen de pré-orientation vibrant pour mise en ligne des objets, ledit moyen de pré-orientation vibrant combinant, d'une part, au moins un canal d'amenée d'objets débouchant sensiblement au-dessus de la zone de réception et des entonnoirs, ledit canal étant sensiblement horizontal ou légèrement incliné et, d'autre part, à une distance prédéterminée du débouché du canal d'amenée, un reposoir, destiné à supporter la queue d'un objet dont la tête serait en arrière dans le sens d'amenée des objets et retarder le basculement et la chute de l'objet jusqu'à ce que la tête dudit objet débouche dudit canal, les objets ayant la tête en avant dans le sens d'amenée des objets basculant et tombant directement, (la distance prédéterminée et la hauteur du débouché par rapport à la hauteur du reposoir sont fonction de la longueur de l'objet et de sa forme afin que la queue puisse effectivement être supportée pour les objets arrivant tête en arrière)
- le reposoir est également vibrant et est rendu solidaire du canal d'amenée,
- le reposoir est rendu non vibrant,
- le reposoir est rendu solidaire d'un bâti fixe,
- le reposoir est rendu solidaire d'une plaque frontale fixe,
- le reposoir est formé d'éléments individuels, chacun solidaire d'un entonnoir et formant une ligne sensiblement continue en face du débouché du canal d'amenée,
- le reposoir est disposé sensiblement à la hauteur du débouché du canal d'amenée ou légèrement plus bas, (pour tenir compte que dans le canal l'objet est légèrement incliné étant donné que la tête est plus large que la queue)
- le reposoir est rendu interchangeable pour adaptation à des objets de formes et tailles spécifiques,
- le/les canaux sont sensiblement droits,
- le/les canaux sont contournés,
- les canaux sont parallèles entre eux,
- la zone de réception et la zone d'extraction sont sensiblement dans un même plan sensiblement vertical ou incliné par rapport à la verticale,
- la zone de réception est dans un plan sensiblement vertical ou incliné par rapport à la verticale et la zone d'extraction est disposée dans un autre plan,
- les objets arrivent dans le plan du déplacement des godets et entonnoirs dans la zone de réception, (le moyen de pré-orientation est parallèle au plan du déplacement des godets et entonnoirs dans la zone de réception)
- les objets arrivent perpendiculairement au plan du déplacement des godets et entonnoirs dans la zone de réception, (le moyen de pré-orientation est perpendiculaire au plan du déplacement des godets et entonnoirs dans la zone de réception)
- les godets et entonnoirs se déplacent en boucle dans un plan sensiblement vertical ou incliné par rapport à la verticale et le canal d'amenée est disposé sensiblement dans ledit plan, (les objets arrivent sensiblement parallèlement au plan du moyen d'entraînement dans la zone de réception)
- les godets et entonnoirs se déplacent en boucle dans un plan sensiblement vertical ou incliné par rapport à la verticale et un premier canal d'amenée sensiblement dans ledit plan arrive par un premier coté du plan et un second canal d'amenée sensiblement dans ledit plan arrive par le second coté dudit plan, (les objets arrivent sensiblement parallèlement au plan du moyen d'entraînement)
- les godets et entonnoirs se déplacent en boucle dans un plan sensiblement vertical ou incliné par rapport à la verticale et on met en oeuvre un ensemble de canaux d'amenée superposés disposés sensiblement dans ledit plan, les débouchés desdits canaux étant décalés les uns des autres, (les objets arrivent sensiblement parallèlement au plan du moyen d'entraînement)
- les godets et entonnoirs se déplacent en boucle dans un plan sensiblement vertical ou incliné par rapport à la verticale et le canal d'amenée n'est pas disposé dans ledit plan, (les objets arrivent en faisant un angle avec le plan du moyen d'entraînement)
- les godets et entonnoirs se déplacent en boucle dans un plan sensiblement vertical ou incliné par rapport à la verticale et le/ les canaux d'amenées sont disposés sensiblement perpendiculaires au dit plan, (les objets arrivent perpendiculairement au plan du moyen d'entraînement)
- dans le cas de plusieurs canaux d'amenées sensiblement perpendiculaires au plan dans lequel se déplacent les godets et entonnoirs, lesdits canaux sont dans un même plan et parallèles entre-eux,
- le moyen de pré-orientation vibrant comporte un ensemble de canaux d'amenées disposés dans un même plan et parallèles entre-eux, chacun des canaux ayant une forme en V ouvert vers le haut, les canaux étant étendus entre une zone d'éparpillement à fond plat du moyen de pré-orientation et le débouché des canaux d'amenées,
- la zone d'éparpillement à fond plat du moyen de pré-orientation est dans un même plan ou, de préférence, plus haut que le plan défini par le fond des V des canaux,
- le moyen de pré-orientation vibrant est configuré en forme de gouttière en U allongé dont le fond comporte les canaux en forme de V parallèles entre-eux,
- le moyen de pré-orientation vibrant en forme de gouttière en U comporte dans une zone intermédiaire de la gouttière en U ayant pour fond les canaux et vers l'extrémité supérieure des deux bords du U des renvois intérieurs de basculement destinés à faire basculer à plat des objets initialement verticaux ou sensiblement verticaux dans les canaux,
- le moyen de pré-orientation vibrant est configuré pour comporter trois canaux en forme de V parallèles entre-eux et dans un même plan,
- on stocke les objets en vrac dans une trémie, les objets étant amenés de la trémie à la zone d'éparpillement à fond plat du moyen de pré-orientation vibrant par un moyen de transfert,
- la trémie est disposée à une hauteur supérieure à la hauteur de la zone d'éparpillement du moyen de pré-orientation vibrant et le moyen de transfert est un plan incliné (ou goulotte), un moyen de régulation libérant par groupe les objets par le fond de la trémie sur le plan incliné, (un groupe d'objet comporte un nombre déterminé d'objets qui peut être identique ou différent à chaque fois)
- on stocke les objets en vrac dans une trémie, les objets étant amenés de la trémie à la zone d'éparpillement à fond plat du moyen de pré-orientation vibrant par un moyen de transfert, et on dispose la trémie à une hauteur inférieure à la hauteur de la zone d'éparpillement du moyen de pré-orientation vibrant et le moyen de transfert comporte un tapis élévateur à tasseaux prélevant les objets de la trémie groupe par groupe et les rejetant à son extrémité supérieure à une hauteur supérieure à celle de la zone d'éparpillement du moyen de pré-orientation vibrant, (un groupe d'objet comporte un nombre déterminé d'objets qui peut être identique ou différent à chaque fois)
- on dispose un plan incliné (goulotte) entre l'extrémité supérieure du tapis élévateur à tasseaux et la zone d'éparpillement du moyen de pré-orientation vibrant,
- on maintien dans le godet l'objet ayant sa tête dans le fond du godet jusqu'à la zone d'extraction par un moyen de retenue,
- on dispose d'un moyen de retenue des objets dans les godets à partir de la zone de retournement jusqu'au moins la zone d'extraction, (ou le moyen de retenu est rendu fonctionnel dans cette partie du trajet au cas où ce moyen de retenu est amovible)
- le moyen de retenue est au moins une lame étendue fixe sur laquelle la partie arrière de la tête (qui est plus large et qui se prolonge par la queue moins large) peut reposer et glisser, (ou une collerette et, plus généralement, le moyen de retenue s'applique sur l'épaulement de l'objet)
- la lame étendue fixe est disposée de telle manière qu'elle se situe dans un espace entre chaque godet et son entonnoir correspondant, (les objets non correctement positionnés, c'est-à-dire n'ayant pas leur tête dans le godet, n'étant pas retenus par la lame et étant éliminés en tombant sous l'effet de la gravité lors du retournement dans la zone de retournement)
- on met en oeuvre des godets dont la face frontale est ouverte pour permettre l'extraction des objets des godets frontalement, un cache frontal fixe commun disposé le long du moyen d'entraînement en regard des faces frontales ouvertes des godets permettant de fermer fonctionnellement lesdits godets, au moins une ouverture étant réalisée dans le cache au moins au niveau de la zone d'extraction, (les godets et entonnoirs sont mobiles et le cache est un élément fixe, d'autres ouvertures peuvent être réalisées dans le cache mais il faut que le cache soit présent/fermé au moins entre y compris la zone de réception et non compris la zone d'extraction afin que les objets soient effectivement retenus dans les godets dans cette partie de leur trajet)
- dans la zone de réception, les entonnoirs sont sensiblement au contact les uns des autres latéralement, (au moins à leurs extrémités supérieures, pour éviter qu'un objet tombe entre deux entonnoirs)
- chacun des entonnoirs est ouvert sur sa face frontale, une plaque frontale fixe commune disposée dans la zone de réception en regard des faces frontales ouvertes des entonnoirs permettant de fermer fonctionnellement lesdits entonnoirs situés dans ladite zone de réception, (les godets et entonnoirs sont mobiles et la plaque est un élément fixe)
- on dispose le reposoir sur la plaque frontale fixe, (de préférence d'une manière interchangeable pour adaptation)
- on provoque dans une zone de basculement, par des moyens de basculement, un basculement de chaque entonnoir après la zone de réception et avant la zone d'extraction afin d'éliminer les objets tombés qui ne seraient pas correctement entrés dans les godets (c'est-à-dire tombés tête en avant au fond des godets pour pouvoir être retenus par le moyen de retenue), (les objets mal orientés ou surnuméraires sont alors éliminés par la face frontale ouverte de l'entonnoir par ce moyen de basculement d'entonnoir agissant en complément du moyen de retenue et du retournement)
- le basculement de l'entonnoir est effectué par pivotement de l'entonnoir l'amenant dans un plan incliné par rapport au plan du moyen d'entraînement,
- on dispose la trémie sensiblement en dessous de la zone de retournement et de la zone de basculement des entonnoirs afin de recycler directement les objets tombés qui ne seraient pas correctement entrés dans les godets, (pour éliminer notamment les objets surnuméraires, inversés, dont la tête n'est pas introduite dans le godet et retenue par le moyen de retenue)
- on met en oeuvre un moyen d'entraînement qui est une chaîne,
- on met en oeuvre un moyen d'entraînement qui est une chaîne, la chaîne est dédoublée en deux parties parallèles homocinétiques comportant chacune des tétons se faisant face par paire, deux paires adjacentes de tétons venant en prise dans un support commun de godet et d'entonnoir, une extrémité du support commun comportant une fourche pour réception et maintien d'un godet interchangeable pour échange entre godets de tailles différentes pour adaptation à des objets de formes et tailles spécifiques,
- les extrémités des supports communs comportant chacun une fourche pour réception et maintien d'un godet interchangeable sont disposées sur une même face accessible à un utilisateur,
- la face accessible est recouverte par un cache frontal amovible, (de préférence le même cache frontal fixe que celui fermant fonctionnellement frontalement les godets)
- les godets et entonnoirs sont réalisés dans une matière plastique,
- la matière plastique est à faible frottement,
- la matière plastique est choisie parmi le polyamide, le polyéthylène, le polychlorure de vinyle, le polypropylène,
- la matière plastique est de préférence du polyamide,
- on dispose un bloc de sortie amovible (possiblement interchangeable pour adaptation à des objets de tailles et formes différentes) dans la zone d'extraction,
- le bloc de sortie comporte dans sa partie inférieure une glissière formée de deux rails séparés par un espace, la partie inférieure de la tête des objets pouvant glisser sur lesdits rails et la queue de l'objet circulant dans l'espace entre les deux rails, lesdits deux rails se prolongeant en amont pour se placer sur le trajet des objets véhiculés par les godets et les extraire des godets,
- le bloc de sortie comporte dans sa partie supérieure une couverture (forme un tunnel d'extraction contourné ouvert à la partie inférieure de son trajet), la hauteur entre les rails et la couverture étant choisie pour permettre le passage des têtes mais empêcher le chevauchement desdites têtes, (dans le bloc de sortie les objets sont mis en mouvement par l'arrivée de nouveaux objets, les derniers extraits des godets poussant les précédents)
- on dispose en aval de la zone d'extraction (sur le bloc de sortie) d'une ligne de transfert des objets comportant un moyen de stockage en ligne ou tampon des objets,
- la ligne de transfert comporte en outre un moyen de fourniture à la demande d'objet pour un équipement aval,
- on dispose des moyens de détection sur la ligne de transfert et on régule au moins la vitesse du moyen de transfert en fonction de la quantité d'objets présents dans la ligne de transfert,
- on régule en outre la vitesse du moyen d'entraînement en boucle des godets et entonnoirs en fonction de la quantité d'objets présents dans la ligne de transfert,
- on régule en outre le fonctionnement de l'équipement aval en fonction de la quantité d'objets présents dans la ligne de transfert,
- on dispose des moyens de détection sur la ligne de transfert, les moyens de détection sur la ligne de transfert étant un seul détecteur de présence d'objet et qui est disposé et configuré pour que la détection d'un objet corresponde au remplissage maximal du moyen de stockage en ligne ou tampon et qu'une anomalie ne soit signalée qu'après une durée déterminée d'absence de détection d'objet,
- on dispose en outre un détecteur de présence d'objet dans la zone d'éparpillement à fond plat du moyen de pré-orientation vibrant,
- on dispose en outre un détecteur de présence d'objet dans la trémie,
- on dispose sur la trémie au moins une trappe de vidange destinée à la vider,
- on dispose les éléments précédemment listés dans une enceinte fermée sécurisée, la ligne de transfert étant extérieure à ladite enceinte et une trappe de remplissage permettant d'introduire des objets en vrac dans la trémie.

L'invention concerne également un dispositif de distribution contrôlée d'objets introduits en vrac, les objets étant des pièces allongées dans une direction dite longueur et à deux extrémités opposées, dont le centre de gravité est décentré dans la longueur et présentant une première extrémité de tête plus large qu'une seconde extrémité de queue plus mince (plus généralement, l'objet présente donc un épaulement), le centre de gravité étant décalé vers la tête, dans lequel chaque objet est orienté individuellement par chute dans un moyen de transport, la tête de l'objet tombant la première dans le moyen de transport qui est ouvert vers le haut dans une zone de réception, puis l'objet retourné, le moyen de transport étant retourné dans une zone de retournement, puis l'objet extrait de son moyen de transport dans une zone d'extraction.

Selon l'invention de dispositif, le moyen de transport est un godet, le dispositif comportant un ensemble de godets, les godets sont solidaires d'un moyen d'entraînement en boucle et l'objet est guidé dans sa chute par un entonnoir disposé dans l'axe de l'ouverture du godet, chacun des godets étant associé à un entonnoir correspondant et les entonnoirs étant solidaires dudit même moyen d'entraînement en boucle, et le dispositif comporte un moyen de retenue permettant de maintenir dans le godet l'objet ayant sa tête dans le fond du godet jusqu'à la zone d'extraction.

Dans divers modes de mise en oeuvre de l'invention de dispositif, les moyens suivants pouvant être utilisés seuls ou selon toutes les combinaisons techniquement possibles, sont employés :
- le dispositif comporte en outre un ou plusieurs moyens permettant l'exécution d'un ou plusieurs des procédés précédemment listés,
- le dispositif comporte un moyen de pré-orientation vibrant pour mise en ligne des objets permettant de faire tomber la tête la première les objets, ledit moyen de pré-orientation vibrant combinant, d'une part, au moins un canal d'amenée d'objets débouchant sensiblement au-dessus de la zone de réception et des entonnoirs, ledit canal étant sensiblement horizontal ou légèrement incliné et, d'autre part, à une distance prédéterminée du débouché du canal d'amenée, un reposoir, destiné à supporter la queue d'un objet dont la tête serait en arrière dans le sens d'amenée des objets et retarder le basculement et la chute de l'objet jusqu'à ce que la tête dudit objet débouche dudit canal, les objets ayant la tête en avant dans le sens d'amenée des objets basculant et tombant directement,
- les godets et entonnoirs se déplacent en boucle dans un plan sensiblement vertical ou incliné par rapport à la verticale et le/ les canaux d'amenées sont disposés sensiblement perpendiculaires au dit plan,
- le moyen de pré-orientation vibrant comporte un ensemble de canaux d'amenées disposés dans un même plan et parallèles entre-eux, chacun des canaux ayant une forme en V ouvert vers le haut, les canaux étant étendus entre une zone d'éparpillement à fond plat et le débouché des canaux d'amenées, le moyen de pré-orientation vibrant étant configuré en forme de gouttière en U allongé dont le fond comporte les canaux en forme de V parallèles entre-eux,
- les objets sont stockés en vrac dans une trémie, les objets étant amenés de la trémie à la zone d'éparpillement à fond plat du moyen de pré-orientation vibrant par un moyen de transfert, et la trémie est disposée à une hauteur inférieure à la hauteur de la zone d'éparpillement du moyen de pré-orientation vibrant et le moyen de transfert comporte un tapis élévateur à tasseaux prélevant les objets de la trémie groupe par groupe et les rejetant à son extrémité supérieure à une hauteur supérieure à celle de la zone d'éparpillement du moyen de pré-orientation vibrant sur un plan incliné (goulotte) disposé entre l'extrémité supérieure du tapis élévateur à tasseaux et la zone d'éparpillement du moyen de pré-orientation vibrant,
- les godets ont leurs faces frontales ouvertes pour permettre l'extraction des objets des godets frontalement, un cache frontal fixe commun disposé le long du moyen d'entraînement en regard des faces frontales ouvertes permettant de fermer fonctionnellement lesdits godets, au moins une ouverture étant réalisée dans le cache au moins au niveau de la zone d'extraction,
- chacun des entonnoirs est ouvert sur sa face frontale, une plaque frontale fixe commune disposée dans la zone de réception en regard des faces frontales ouvertes permettant de fermer fonctionnellement lesdits entonnoirs situés dans ladite zone de réception et le dispositif comporte des moyens permettant, dans une zone de basculement, un basculement de chaque entonnoir après la zone de réception et avant la zone d'extraction afin d'éliminer les objets tombés qui ne seraient pas entrés dans les godets,
- la trémie est disposée sensiblement en dessous de la zone de retournement et de l'éventuelle zone de basculement des entonnoirs afin de recycler directement les objets tombés qui ne seraient pas correctement entrés dans les godets,
- le moyen d'entraînement est une chaîne, la chaîne étant dédoublée en deux parties parallèles homocinétiques comportant chacune des tétons se faisant face par paire, deux paires adjacentes de tétons venant en prise dans un support commun de godet et d'entonnoir, une extrémité du support commun comportant une fourche pour réception et maintien d'un godet interchangeable pour échange entre godets de tailles différentes pour adaptation à des objets de formes et tailles spécifiques,
- un moyen de retenue des objets dans les godets est disposé à partir de la zone de retournement jusqu'au moins la zone d'extraction, ledit moyen étant au moins une lame étendue fixe sur laquelle la partie arrière de la tête (qui se prolonge par la queue, plus généralement le moyen de retenue s'applique sur un l'épaulement de l'objet) peut reposer et glisser, (la/les lames fixes sont configurées pour s'engager entre les godets et entonnoirs)
- une ligne de transfert des objets comportant un moyen de stockage en ligne ou tampon des objets est disposée en aval de la zone d'extraction.

L'invention concerne également une machine avec un bâti recevant des ensembles unitaires fonctionnels interchangeables pour réalisation du dispositif précédent selon l'une ou plusieurs de ses caractéristiques indiquées et/ou pour permettre un fonctionnement selon le procédé précédent selon l'une ou plusieurs de ses caractéristiques indiquées.

Les ensembles unitaires fonctionnels sont au moins le moyen de transfert avec sa trémie et tapis élévateur, le moyen d'entraînement et la ligne de transfert aval.

L'invention permet la réalisation d'un dispositif facilement adaptable à des objets de dimensions et structures différentes car les éléments à changer, notamment godets et reposoir, sont directement accessibles. De ce fait, l'adaptation peut se faire sur le site/chaîne d'utilisation du dispositif sans avoir à retourner le dispositif chez le fabriquant.

La présente invention va maintenant être exemplifiée sans pour autant en être limitée avec la description qui suit en relation avec les figures suivantes:
la Figure 1 qui représente une machine selon l'invention vue de face,
la Figure 2 qui représente la même machine vue latéralement coté moyen de transfert à tapis élévateur avec sa trémie de stockage d'objets en vrac,
la Figure 3 qui représente la même machine vue latéralement coté moyen de pré-orientation à canaux d'amenée vibrants,
la Figure 4 qui représente la machine vue de dessus,
les Figures 5, 6 et 7 qui représentent l'ensemble fonctionnel unitaire qu'est le moyen de transfert à tapis élévateur et avec la trémie de stockage d'objets en vrac selon diverses orientations en perspective,
les Figures 8 et 9 qui représentent l'ensemble fonctionnel unitaire qu'est la ligne de transfert des objets comportant un moyen de stockage en ligne ou tampon des objets,
la Figure 10 qui représente une vue perspective de l'ensemble fonctionnel unitaire qu'est le moyen d'entraînement des godets et entonnoirs avec le moyen de retenue et avec un bloc de sortie,
la Figure 11 qui représente une autre vue perspective de l'ensemble fonctionnel unitaire qu'est le moyen d'entraînement des godets et entonnoirs en cours de démontage, le cache frontal ayant été enlevé,
la Figure 12 qui représente selon encore une autre vue perspective de l'ensemble fonctionnel unitaire qu'est le moyen d'entraînement des godets et entonnoirs à un autre stade de démontage,
les Figures 13, 14 et 15 qui représentent diverses vues perspectives d'un support commun de godet et entonnoir avec son godet et son entonnoir basculant, et
les Figures 16, 17 et 18 qui représentent diverses vues perspectives d'un bloc de sortie.

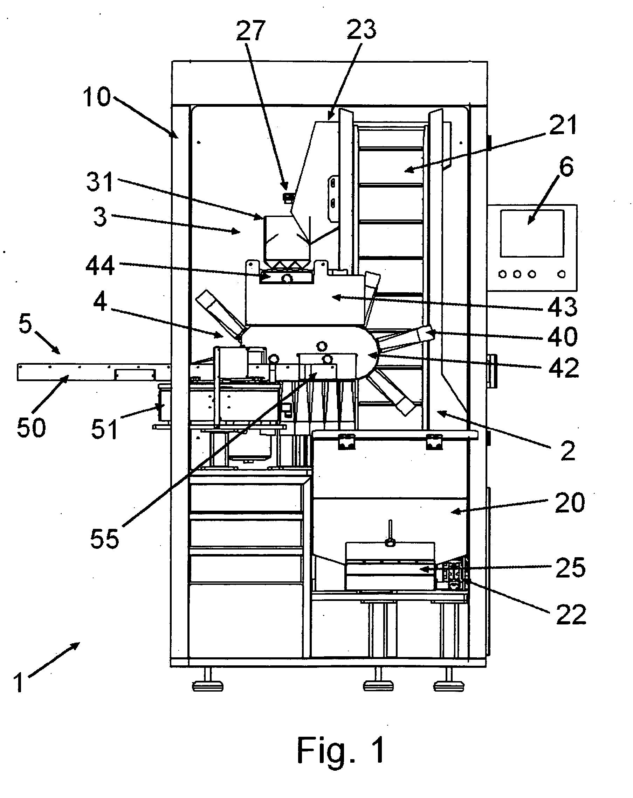

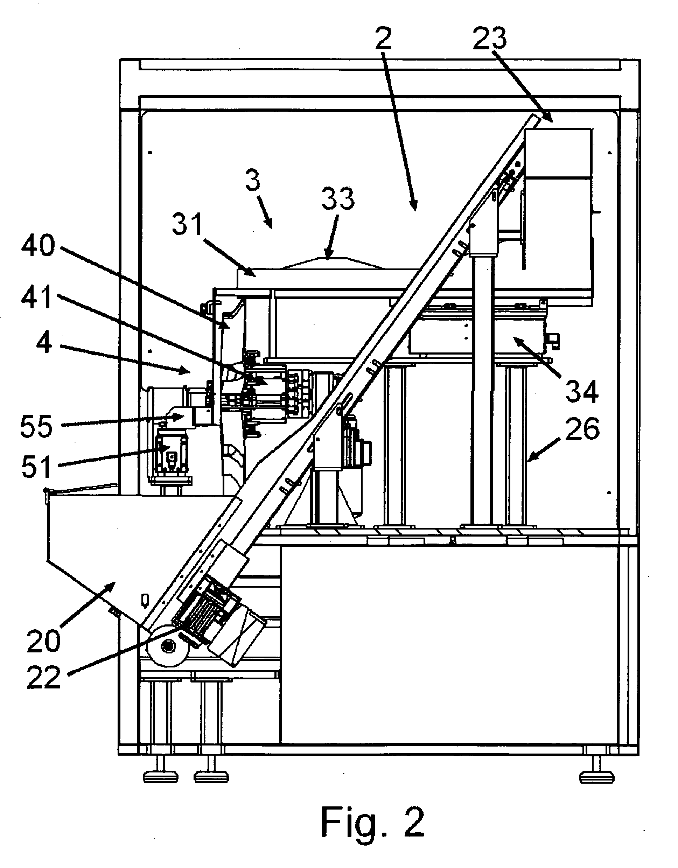

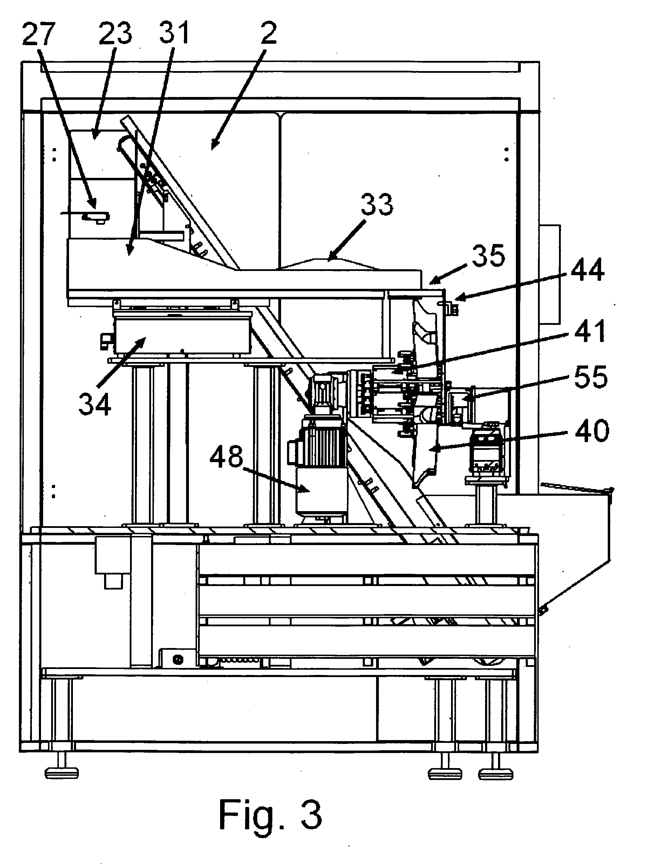

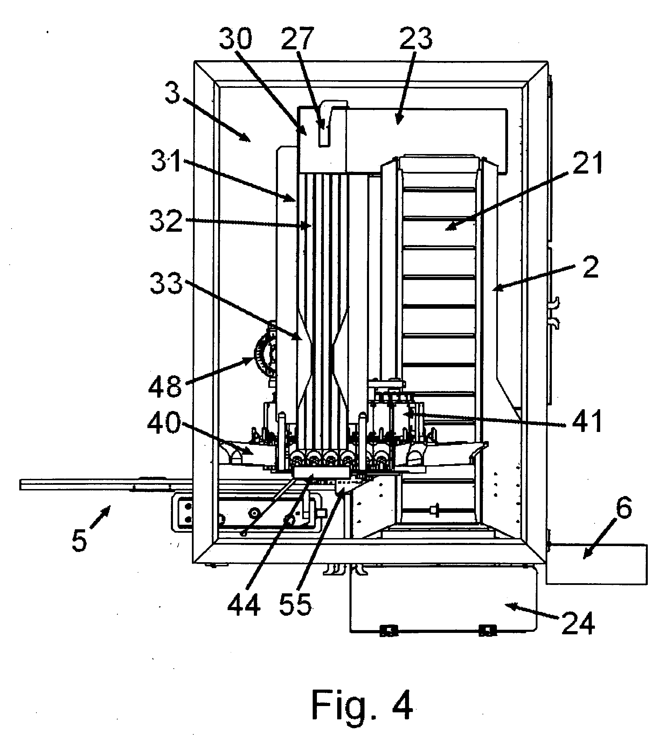

En ce qui concerne les figures, on doit noter que la machine est dans un bâti normalement fermé par des parois extérieures pour des raisons de sécurité, parois pouvant être transparentes ou non, et les vues de la machine sur les Figures 1 à 4 ont été obtenues en rendant transparentes les parois qui ne l'étaient éventuellement pas.

D'une manière générale, les objets distribués par le dispositif sont des pièces allongées dont le centre de gravité est décentré sur leur longueur avec une tête plus large (que la queue) se poursuivant par une queue moins large/plus fine (que la tête), la tête ayant une forme sensiblement cylindrique et comportant un dessus de tête opposé à un dessous de tête ou de collerette, la queue se rattachant à la tête par le dessous de tête ou de collerette selon le cas. Dans le cadre de l'invention on ne fait pas la différence entre les têtes avec ou sans collerette, le moyen de retenue du type lame retenant la tête par son dessous directement ou par l'intermédiaire de la collerette, de même que les rails du bloc de sortie supportant la tête par son dessous directement ou par l'intermédiaire de la collerette selon le cas et l'invention s'appliquant à tous ces cas.

L'invention est mise en oeuvre dans une machine 1 représentée sur les Figures 1 à 4 avec un bâti 10 qui forme un ensemble sécurisé comportant des parois de protection pouvant, pour certaines d'entre-elles, être ouvertes pour accéder aux éléments de la machine. Outre des capteurs notamment pour détecter la présence des objets dans certaines des parties de la machine (notamment dans la trémie, dans la zone d'éparpillement et plus en aval), les différentes parties mécaniques actionnées par des effecteurs (notamment moteur électrique et dispositif de vibration) sont sous le contrôle d'un équipement d'automatisation avec des entrées/sorties notamment d'interfaçage accessible par un boîtier de commande 6 à l'extérieur de la machine pour action et contrôle local d'un opérateur. Des capteurs de sécurité (non représentés) sont disposés sur ces parois amovibles afin de mettre en sécurité la machine lors des interventions.

Les objets sont introduits en vrac dans la machine et font un circuit dans la machine jusqu'à leur sortie où ils sont disponibles un à un selon une orientation prédéterminée. Tout d'abord les objets sont extraits par groupes d'une trémie 20 de stockage d'objets en vrac par un moyen de transfert 2 à tapis élévateur 21 à tasseaux puis passent dans un moyen de pré-orientation 3 vibrant à canaux 32 d'amenée puis, après une chute, sont repris par un moyen de transport 4 à godets et entonnoirs entraînés par un moyen d'entraînement à chaîne dédoublée puis les objets sont extraits du moyen de transport 4 et passent dans une ligne de transfert 5 comportant un moyen de stockage en ligne (= tampon) des objets.

Le bâti est de préférence réglable en hauteur pour pouvoir adapter la hauteur de sortie des objets dans une chaîne industrielle complète comportant plusieurs types de machines travaillant les unes à la suite des autres. Le bâti peut également comporter des espaces de rangement d'accessoires comme par exemple des godets ou entonnoirs pour d'autres types d'objets.

On va maintenant décrire une machine selon l'invention selon le sens de circulation des objets depuis la trémie 20 de stockage des objets en vrac jusqu'à la sortie de la ligne de transfert 5.

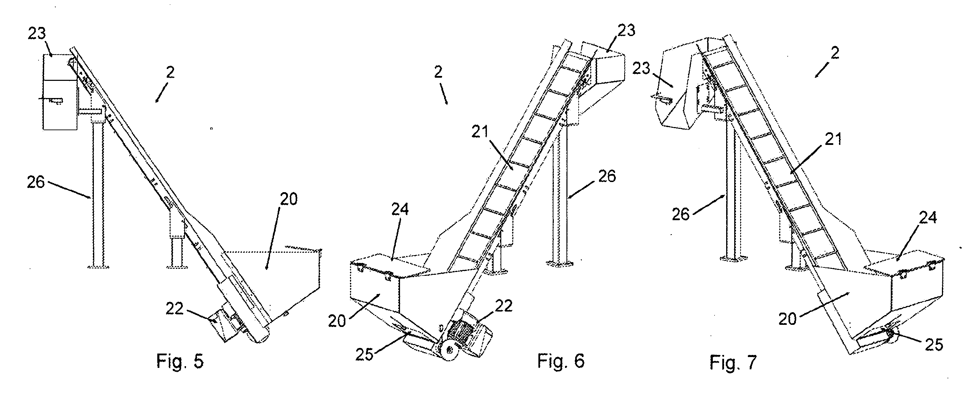

La trémie 20 qui stocke des objets en vrac est disposée dans une partie basse de la machine en débordement partiel du bâti avec une trappe 24 de remplissage. Ainsi, une trappe 24 disposée sur l'extérieur de la machine permet le remplissage par le haut de la trémie 20 de stockage des objets en vrac. La vidange de la trémie peut s'effectuer par une trappe 25 disposée en partie basse de la trémie 20. L'extrémité inférieure d'un moyen de transfert 2 du type tapis élévateur 21 à tasseaux est disposée dans une partie de la trémie. Le moyen de transfert permet d'élever des groupes d'objets jusqu'à une extrémité haute où ils tombent sur un plan incliné (= goulotte) 23 les envoyant vers une zone d'éparpillement 30 à fond plat du moyen de pré-orientation 3 vibrant. Le moyen de transfert est actionné par une motorisation 22 électrique. Le moyen de transfert 2 avec la trémie 20 et le plan incliné ou goulotte 23 forment un ensemble fonctionnel unitaire comme on peut le voir sur les Figures 5 à 7 et qui s'adapte dans le bâti grâce à des moyens de liaison adaptables dont notamment des pieds 26 de positions ajustables.

Sur la zone d'éparpillement 30 les objets se répartissent aléatoirement du fait, d'une part, du mouvement qu'ils ont acquis sur le plan incliné ou goulotte 23 et, d'autre part, de la vibration du moyen de pré-orientation. Un capteur 27, dans cet exemple du type à ultra-sons, permet de détecter la présence ou non (ou le passage) des objets sur la zone d'éparpillement 30. Le moyen de pré-orientation se présente globalement comme une gouttière 31 en U allongée sensiblement horizontale avec des bords latéraux et un fond qui comporte (sauf dans la zone d'éparpillement 30 où le fond est plat) des canaux 32 (trois dans cet exemple) en forme de V parallèles entre-eux. Les vibrations d'un générateur 34 transmises au moyen de pré-orientation 3 sont orientées de manière à ce que les objets progressent de la zone d'éparpillement 30 vers l'extrémité 35 des canaux débouchant dans le vide. Grâce à ces mêmes vibrations les objets sont amenés à s'aligner selon leur longueur dans la direction sensiblement horizontale des canaux, soit tête en avant, soit tête en arrière par rapport au sens de leur progression. Au cas où certains des objets seraient dans une position verticale ou inclinée au lieu d'horizontale (sensiblement horizontale en pratique du fait des formes et dimensions respectives des objets et canaux) dans les canaux, par exemple parce que la queue prendrait appui contre une paroi du moyen de pré-orientation 3, des renvois intérieurs de basculement 33 aux extrémités supérieures (ou à une hauteur intermédiaire) des parois permettent le basculement desdits objet et leur mise à l'horizontale. Ces renvois intérieurs de basculement 33 sont dans une zone intermédiaire du moyen de pré-orientation 3 ayant pour fond les canaux 32.

La tête de l'objet ayant une masse importante par rapport au reste de l'objet (plus généralement, le centre de gravité de l'objet étant décalé vers la tête), l'objet se déplaçant la tête la première tombe directement tête en avant une fois arrivé à l'extrémité 35 du canal 32. Par contre, pour un objet arrivant tête en arrière, la queue dépasse l'extrémité du canal et la tête de l'objet reste dans le canal tant que le centre de gravité de l'objet n'a pas dépassé l'extrémité du canal (tant qu'il est toujours supporté par le moyen de pré-orientation 3). Cette queue reste sensiblement horizontale, voire légèrement inclinée vers le bas du fait des dimensions respectives des différentes parties de l'objet et du V du canal et elle vient en appui contre un reposoir 44 situé à distance en avant (dans le sens de progression des objets) de l'extrémité 35 des canaux. Un objet tête en arrière est donc maintenu partiellement « en l'air » par sa queue supportée par le reposoir 44 jusqu'à ce que sa tête quitte l'extrémité du moyen de pré-orientation et qu'il tombe tête en avant.

On peut noter qu'il existe donc un vide entre l'extrémité 35 du moyen de pré-orientation 3 et le reposoir 44, vide dans lequel les objets peuvent tomber. La largeur de ce vide, en pratique l'avancement/la largeur du reposoir, sont adaptés aux dimensions des objets afin que les objets arrivant tête en avant tombe bien tête en avant sans entrave et que les objets arrivant tête en arrière soient retenus temporairement jusqu'à ce que leurs têtes arrivent à l'extrémité des canaux et qu'ils puissent également tomber tête en avant.

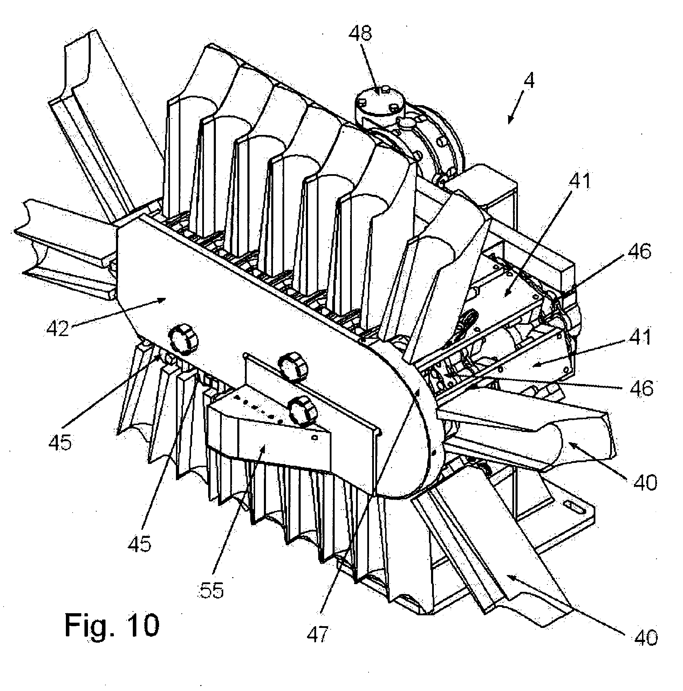

L'extrémité 35 du moyen de pré-orientation 3 est située au-dessus d'une zone de réception d'un moyen de transport 4 avec convoyeur (= moyen d'entraînement) en boucle permettant la circulation d'entonnoirs 40 et de godets 45 disposés en alignement fonctionnel, les entonnoirs guidant les objets tombant vers leur godet correspondant, la tête de l'objet tombant au fond du godet ouvert vert le haut dans ladite zone de réception. On comprend que le volume interne du godet dans lequel la tête de l'objet tombe doit être plus large que la tête de l'objet afin que ce dernier tombe effectivement au fond du godet. Un espace existe entre l'entonnoir et le godet et permet à un moyen de retenue 47 de maintenir la tête dans le godet après retournement du godet (et de son entonnoir) dans une zone de retournement et jusqu'à une zone d'extraction où l'objet est extrait du godet. Le moyen de retenue 47 est une lame (ou deux, une de chaque coté de la tige) fixe contre laquelle la partie/face inférieure de la tête de l'objet (partie/face se poursuivant par la tige plus mince que la tête) peut glisser après retournement du godet et donc de l'objet s'y trouvant et donc être maintenu dans son godet. Le moyen de retenu 47 est donc disposé en aval de la zone de réception, l'objet tombant devant atteindre le fond du godet, et avant ou au début de la zone de retournement des godets 45 et entonnoirs 40 afin que l'objet correctement positionné tête dans le fond du godet y soit maintenu après retournement. Comme mieux visible sur la Figure 10, le moyen de retenu 47 à lame est fixé sur un cache frontal 42 dont la fonction sera explicitée plus loin.

Le godet et son entonnoir correspondant forment une paire et sont solidaires du même convoyeur/moyen d'entraînement qui est ici une chaîne 46 dédoublée (chaque demi-chaîne étant parallèle et homocinétique à l'autre) par l'intermédiaire d'un support commun 41 de godet et entonnoir venant en prise sur la chaîne dédoublée grâce à deux paires de tétons de chaîne par support commun. Le convoyeur/moyen d'entraînement à chaîne et les godets et entonnoirs sont dans un plan général sensiblement vertical et le moyen de pré-orientation est sensiblement perpendiculaire audit plan. L'ensemble des paires godet-entonnoir effectue donc un circuit en boucle en passant d'une zone de réception (chute des objets dans les godets), une éventuelle zone de basculement (basculement des entonnoirs), une zone de retournement (les objets correctement positionnés étant maintenus dans les godets par un moyen de retenu), une zone d'extraction (objets sortis des godets) et retour vers la zone de réception.

On comprend que lors du retournement, au cas peu probable où un objet serait tombé queue la première dans le godet, l'objet ne pourra pas être retenu dans le godet puisque le moyen de retenue à lame ne peut retenir la queue se trouvant dans le godet, la tête étant en dehors du godet, et l'objet sera éliminé du godet et de l'entonnoir par la simple gravité. On comprend également qu'il est préférable, comme dans l'exemple représenté, que la trémie 20 de stockage soit disposée en dessous de la zone de retournement pour que les objets éliminés soient directement recyclés. Il se peut aussi que plusieurs objets tombent dans un même entonnoir, dans ce cas si l'un des objets est correctement positionné tête la première dans le godet, il restera retenu par le moyen de retenu et l'autre/les autres objets ne pouvant rentrer dans le godet occupé (un godet ne peut contenir qu'une tête d'objet) resterons dans l'entonnoir et ne seront pas retenus et donc éliminés lors du retournement des godets et entonnoirs dans la zone de retournement. En pratique seul un objet dont la tête est dans le godet peut être retenu et tout autre positionnement d'objet entraînera l'élimination du/des autres objets ayant ces autres positions. On comprend que la machine mettant en oeuvre cette invention est de préférence réglée de telle manière qu'en moyenne le plus de godets soient remplis correctement en évitant un trop fort taux de recyclage, le risque étant qu'une arrivée massive des objets dépassant les capacités de réception correcte par les godets diminue la quantité d'objets correctement positionnés dans les godets par blocage lors de la chute dans les entonnoirs.

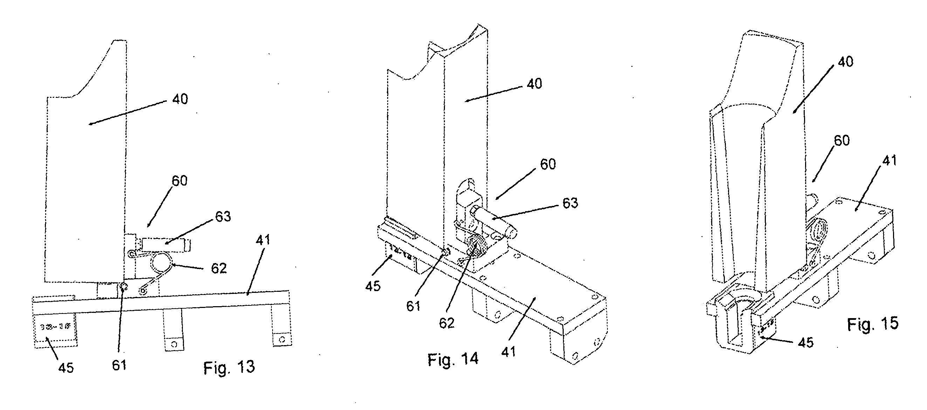

Bien que cette structure permette déjà une bonne sélection dans le positionnement des objets, la machine présentée dans l'exemple de réalisation comporte un moyen supplémentaire pour élimination des objets non correctement positionnés. A cette fin, chacun des entonnoirs 40 est ouvert sur sa face frontale (= avant), une plaque frontale 43 fixe commune disposée dans la zone de réception en regard des faces frontales ouvertes des entonnoirs permettant de fermer fonctionnellement lesdits entonnoirs situés dans ladite zone de réception et on provoque dans une zone de basculement, un basculement de chaque entonnoir après la zone de réception et avant la zone d'extraction afin d'éliminer les objets tombés qui ne seraient pas entrés correctement dans les godets. Ce mouvement de basculement qui a lieu dans un plan avant/arrière est distinct du mouvement de retournement qui a lieu dans un plan transversal sensiblement perpendiculaire au précédent. A cette fin et comme mieux visible sur les Figures 13, 14 et 15, chaque entonnoir comporte un moyen de basculement 60 avec une articulation 61 vers sa base (coté godet) sur son support commun 41, un ressort de rappel 62 qui permet de maintenir l'entonnoir vertical ou, à tout le moins, sensiblement contre la plaque frontale 43 (appliqué ou non) et un ergot 63 sur l'entonnoir qui peut entraîner le basculement de l'entonnoir lorsqu'il est poussé par un poussoir fixe disposé dans la zone de basculement et que l'entonnoir entraîné passe dans cette zone. De préférence, la plaque frontale 43 n'est présente que dans la zone de réception et elle sert de support au reposoir 44.

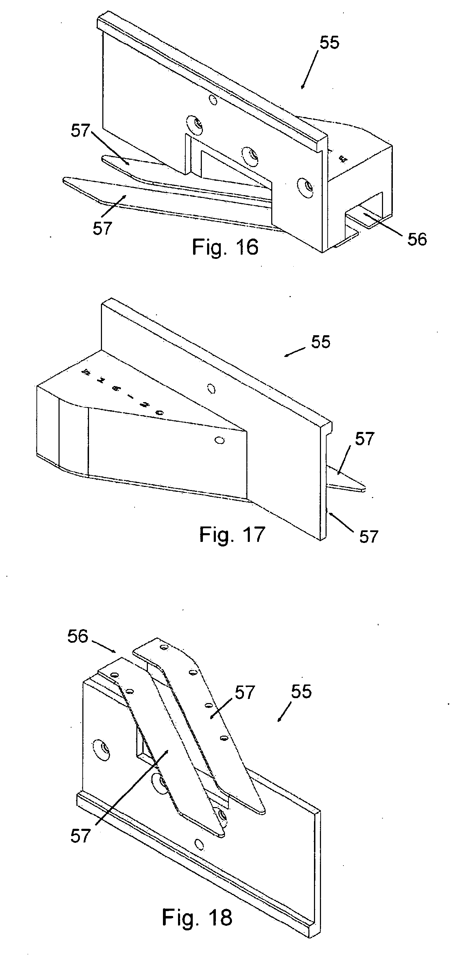

On peut noter sur les Figures 13, 14 et 15 que le godet 45 est disposé entre deux doigts de l'extrémité du support commun 41 et est rendu amovible pour changement de godet en fonction des objets à recevoir. Dans cet exemple le godet 45 (tout comme le bloc de sortie 55 Figure 17) comporte des indications sur la gamme des tailles d'objets pouvant être traités afin de faciliter l'échange de ces éléments lorsque cela est nécessaire.

L'extraction des objets des godets se fait sensiblement perpendiculairement au plan général du moyen d'entraînement dans la zone d'extraction et l'extraction de l'objet se faisant donc latéralement aux godets, une face latérale, en l'espèce frontale, des godets est ouverte. Afin de maintenir en place latéralement les objets dans les godets en dehors de la zone d'extraction, un cache frontal 42 fixe commun est disposé le long du moyen d'entraînement en regard des faces frontales ouvertes des godets afin de fermer fonctionnellement lesdits godets. Au moins une ouverture est réalisée dans le cache au moins au niveau de la zone d'extraction.

Un bloc de sortie 55 amovible (possiblement interchangeable pour adaptation à des objets de tailles et formes différentes ou à forme de trajet de sortie différent, des moyens de fixation amovibles du bloc de sortie 55 sur le cache frontal 42 étant utilisés) est disposé dans la zone d'extraction. Comme mieux visible sur les Figures 16, 17 et 18, le bloc de sortie 55 comporte dans sa partie inférieure une glissière 57 formée de deux rails séparés par un espace, la partie inférieure de la tête des objets (partie inférieure se poursuivant par la queue) pouvant glisser sur lesdits rails et la queue de l'objet circulant dans l'espace entre les deux rails, lesdits deux rails se prolongeant en amont pour se placer sur le trajet des objets véhiculés par les godets, entre les godets et entonnoirs, et les extraire des godets. Sur la Figure 16, on peut voir, outre un tunnel d'extraction 56, la face du bloc de sortie qui vient contre le cache frontal 42. Sur la Figure 18, le bloc de sortie 55 a été renversé pour permettre de mieux voir la glissière 57 avec ses deux rails. On comprend que le/les rails jouent la même fonction de retenue des objets que le moyen de retenue 47. Les rails peuvent donc également être sous forme de lames dans la continuité de la ou des lames du moyen de retenue mais ils sont contournés pour que les objets puissent quitter les godets frontalement. En pratique, les rails du bloc de sortie sont parallèles et on une forme en S afin que les objets soient finalement envoyés dans une direction parallèle à celle du plan général du moyen d'entraînement. On comprend qu'une forme en quart de circonférence est possible si l'on souhaite que les objets soient finalement envoyés dans une direction perpendiculaire au plan général du moyen d'entraînement.

Dans le bloc de sortie 55 les objets sont mis en mouvement par l'arrivée de nouveaux objets, les derniers extraits des godets poussant les précédents et pour éviter un risque de chevauchement desdits objets extraits, le bloc de sortie comporte dans sa partie supérieure une couverture et forme un tunnel d'extraction 56 contourné ouvert à sa partie inférieure. La hauteur entre les rails et la couverture est alors choisie pour permettre le passage des têtes tout en empêchant le chevauchement desdites têtes. De même, éventuellement, pour la largeur du tunnel d'extraction 56.

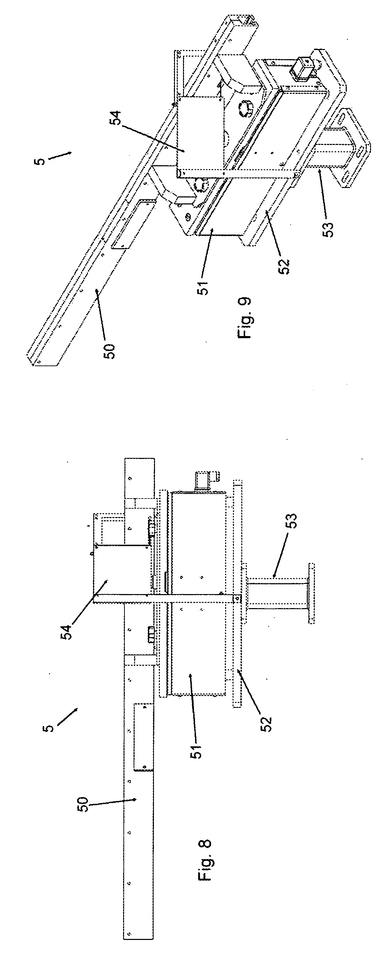

Enfin, on dispose en aval de la zone d'extraction, en sortie du bloc de sortie 55, une ligne de transfert 5 des objets comportant un moyen de stockage en ligne ou tampon des objets. Cette ligne de transfert 5 comporte une réglette 50 ouverte en son milieu sur son fond et qui est mise en vibration par un générateur 51, le générateur étant posé sur un socle 52 monté sur un pied 53 possiblement réglable en hauteur. Un détecteur 54 est également mis en oeuvre afin de détecter au moins la présence ou non d'objets dans la ligne de transfert 5. La ligne de transfert 5 avec son générateur forme un ensemble fonctionnel unitaire comme on peut le voir sur les Figures 8 et 9 et qui s'adapte en partie dans le bâti de la machine.

On retrouve sur les Figures 5 à 7, en plus détaillé, les éléments précédemment décrits pour le moyen de transfert 2 en tant qu'ensemble fonctionnel unitaire adaptable dans le bâti. De même pour les Figures 8 et 9 en ce qui concerne la ligne de transfert 5. De même pour les Figures 10 à 12 en ce qui concerne le moyen de transport 4.

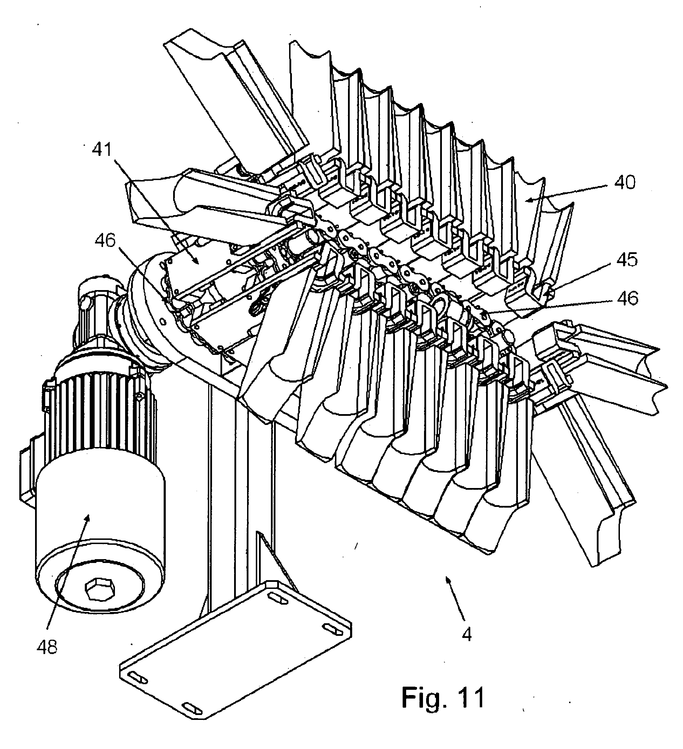

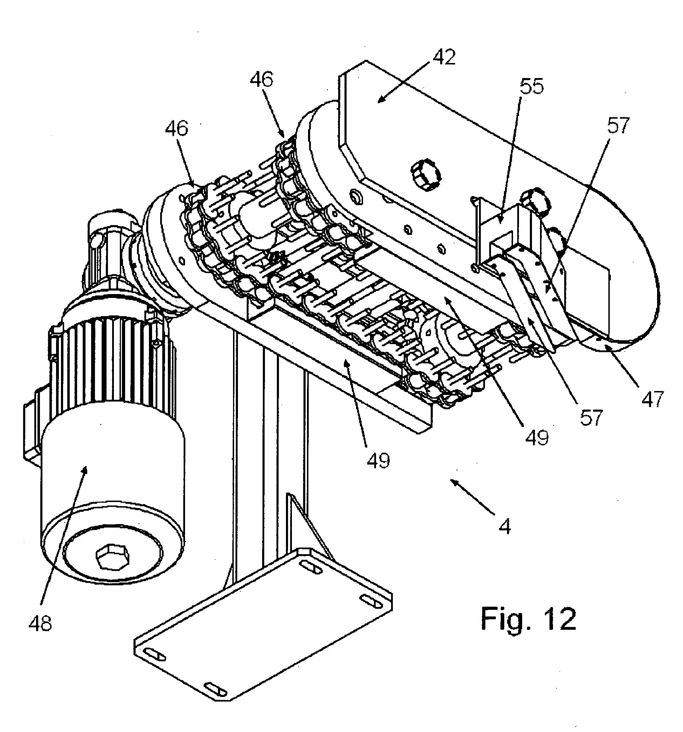

En particulier, sur la Figure 11 pour laquelle le cache frontal 42 a été démonté, on peut voir les ouvertures des faces avant des godets 45 et entonnoirs 40 ainsi que le moteur 48 d'entraînement de la chaîne dédoublée 46. On comprend qu'une chaîne simple peut, dans une alternative, être utilisée, un moyen de guidage des supports communs 41 pouvant être alors utilisé pour assurer un déplacement régulier de ces éléments (pour notamment conserver le parallélisme des entonnoirs et godets au moins dans la zone de réception). En autre alternative, un mécanisme d'entraînement du type à tapis souple avec godets et entonnoirs peut être mis en oeuvre. Sur la Figure 12, les supports communs 41 avec leurs godets et entonnoirs ont été démontés et on peut mieux voir la chaîne dédoublée avec ses tétons de chaîne destinés à venir en prise dans les supports communs. On peut également voir la façon dont le moyen de retenue 47 se raccorde à la glissière 57, le cache frontal 42 étant en place. La chaîne dédoublée est mise en mouvement par la rotation d'un axe moteur portant deux plateaux dentés. Dans ses portions de trajet droit, la chaîne est guidée par un moyen de guidage 49 pour qu'au moins dans la zone de réception le parallélisme des entonnoirs et godets soit maintenu.

L'exemple de réalisation présenté permet d'obtenir des cadences d'environ 120 cps/mn (sortie de 120 objets positionnés par minute). On comprend que cette valeur est indicative et qu'elle peut varier en fonction de nombreux paramètres comme par exemple, pour une machine donnée, de la vitesse d'avancement du moyen d'entraînement et du moyen de transfert. Pour différentes machines, ce sera par exemple le nombre de canaux, le nombre de godets et d'entonnoirs qui pourra expliquer la différence dans les cadences.

Les matériaux mis en oeuvre dans le dispositif sont de préférence métalliques pour pouvoir résister aux contraintes mécaniques des vibrations tout en présentant une certaine rigidité. Par contre les entonnoirs et les godets sont de préférence en matière plastique.

On comprend que les exemples donnés sont indicatifs et que l'invention peut être déclinée de diverses manières sans pour autant sortir du cadre général de sa définition. Par exemple, dans la zone d'extraction la sortie des objets au lieu d'être latérale peut être verticale. Par exemple le moyen de retenu, au lieu d'être fixe du type lame(s) étendue(s) passive peut être actif et individualisé à chaque couple godet-entonnoir, une lame mobile par couple avec moyen élastique la ramenant à une position déterminée pouvant être actionnée par un/des poussoirs fixes disposés en des endroits spécifiques du trajet des couples, la lame étant escamotée au moins dans la zone de réception et, par contre, amenée à retenir l'objet au moins dans la zone de retournement.

Enfin, les dessins sont exemplatifs et on peut mettre en oeuvre l'invention sans sortir du cadre défini par les revendications avec un/des ensembles unitaires (moyen de transfert à tapis élévateur et/ou moyen d'entraînement et/ou ligne de transfert) qui peuvent être symétriques par rapport aux représentations sur les figures de la demande, notamment pour avoir une sortie des objets distribués à droite au lieu d'une sortie à gauche comme représenté. De même, il est possible de disposer les ensembles fonctionnels unitaires d'une manière différente de celle représentée, par exemple avec le moyen de transfert à tapis élévateur disposé à gauche au lieu de la droite comme représenté, les ensembles restant continuité fonctionnelle.

## Revendications

1. Procédé de distribution contrôlée d'objets introduits en vrac, les objets étant des pièces allongées dans une direction dite longueur et à deux extrémités opposées, dont le centre de gravité est décentré dans la longueur et présentant une première extrémité de tête plus large qu'une seconde extrémité de queue plus mince, le centre de gravité étant décalé vers la tête, dans lequel on oriente individuellement chaque objet par chute dans un moyen de transport, la tête de l'objet tombant la première dans le moyen de transport qui est ouvert vers le haut dans une zone de réception, puis retournement de l'objet, le moyen de transport étant retourné dans une zone de retournement, puis extraction de l'objet de son moyen de transport dans une zone d'extraction, **caractérisé en ce que** le moyen de transport (4) est à godet et que l'on met en oeuvre un ensemble de godets et on solidarise les godets à un moyen d'entraînement en boucle et que l'on guide l'objet dans sa chute par un entonnoir (40) disposé dans l'axe de l'ouverture du godet, chacun des godets étant associé à un entonnoir correspondant et les entonnoirs étant solidaires dudit même moyen d'entraînement en boucle.

2. Procédé selon la revendication 1 , **caractérisé en ce qu'**on fait tomber la tête la première les objets par un moyen de pré-orientation (3) vibrant pour mise en ligne des objets, ledit moyen de pré-orientation vibrant combinant, d'une part, au moins un canal d'amenée (32) d'objets débuchant (35) sensiblement au-dessus de la zone de réception et des entonnoirs, ledit canal étant sensiblement horizontal ou légèrement incliné et, d'autre part, à une distance prédéterminée du débouché du canal d'amenée, un reposoir (44), destiné à supporter la queue d'un objet dont la tête serait en arrière dans le sens d'amenée des objets et retarder le basculement et la chute de l'objet jusqu'à ce que la tête dudit objet débouche dudit canal, les objets ayant la tête en avant dans le sens d'amenée des objets basculant et tombant directement.

3. Procédé selon la revendication 2, **caractérisé en ce que** le moyen de pré-orientation (3) vibrant comporte un ensemble de canaux d'amenées (32) disposés dans un même plan et parallèles entre-eux, chacun des canaux ayant une forme en V ouvert vers le haut, les canaux étant étendus entre une zone d'éparpillement (30) à fond plat et le débouché (35) des canaux d'amenées.

4. Procédé selon la revendication 1, 2 ou 3, **caractérisé en ce que** l'on maintien dans le godet l'objet ayant sa tête dans le fond du godet jusqu'à la zone d'extraction par un moyen de retenue et **en ce que** le moyen de retenue est au moins une lame fixe étendue sur laquelle la partie arrière de la tête de l'objet peut reposer et glisser.

5. Procédé selon l'une quelconque des revendications précédentes, **caractérisé en ce que** l'on stocke les objets en vrac dans une trémie (20), les objets étant amenés de la trémie à la zone d'éparpillement (30) à fond plat du moyen de pré-orientation (3) vibrant par un moyen de transfert (2), et **en ce que** l'on dispose la trémie à une hauteur inférieure à la hauteur de la zone d'éparpillement du moyen de pré-orientation vibrant et le moyen de transfert comporte un tapis élévateur (21) à tasseaux prélevant les objets de la trémie groupe par groupe et les rejetant à son extrémité supérieure à une hauteur supérieure à celle de la zone d'éparpillement du moyen de pré-orientation vibrant.

6. Procédé selon l'une quelconque des revendications précédentes, **caractérisé en ce qu'**on met en oeuvre des godets dont la face frontale est ouverte pour permettre l'extraction des objets des godets frontalement, un cache frontal (42) fixe commun disposé le long du moyen d'entraînement en regard des faces frontales ouvertes permettant de fermer fonctionnellement lesdits godets, au moins une ouverture étant réalisée dans le cache au moins au niveau de la zone d'extraction, et **en ce que** chacun des entonnoirs est ouvert sur sa face frontale, une plaque frontale (43) fixe commune disposée dans la zone de réception en regard des faces frontales ouvertes permettant de fermer fonctionnellement lesdits entonnoirs situés dans ladite zone de réception et **en ce qu'**on provoque dans une zone de basculement, un basculement par des moyens de basculement (60, 61, 62, 63) de chaque entonnoir après la zone de réception et avant la zone d'extraction afin d'éliminer les objets tombés qui ne seraient pas correctement entrés dans les godets.

7. Procédé selon l'une quelconque des revendications précédentes, **caractérisé en ce que** l'on met en oeuvre un moyen d'entraînement qui est une chaîne, la chaîne est dédoublée en deux parties parallèles homocinétiques comportant chacune des tétons se faisant face par paire, deux paires adjacentes de tétons venant en prise dans un support commun (41) de godet et d'entonnoir (40), une extrémité du support commun comportant une fourche pour réception et maintien d'un godet interchangeable pour échange entre godets de tailles différentes pour adaptation à des objets de formes et tailles spécifiques.

8. Dispositif de distribution contrôlée d'objets introduits en vrac, les objets étant des pièces allongées dans une direction dite longueur et à deux extrémités opposées, dont le centre de gravité est décentré dans la longueur et présentant une première extrémité de tête plus large qu'une seconde extrémité de queue plus mince, le centre de gravité étant décalé vers la tête, dans lequel chaque objet est orienté individuellement par chute dans un moyen de transport, la tête de l'objet tombant la première dans le moyen de transport qui est ouvert vers le haut dans une zone de réception, puis l'objet retourné, le moyen de transport étant retourné dans une zone de retournement, puis l'objet extrait de son moyen de transport dans une zone d'extraction,
**caractérisé en ce que** le moyen de transport (4) est à godet, le dispositif comportant un ensemble de godets et **en ce que** les godets sont solidaires d'un moyen d'entraînement en boucle et l'objet est guidé dans sa chute par un entonnoir (40) disposé dans l'axe de l'ouverture du godet, chacun des godets étant associé à un entonnoir correspondant et les entonnoirs étant solidaires dudit même moyen d'entraînement en boucle, et qu'il comporte un moyen de retenue permettant de maintenir dans le godet l'objet ayant sa tête dans le fond du godet, le moyen de retenue étant disposé à partir de la zone de retournement jusqu'au moins la zone d'extraction.

9. Dispositif selon la revendication 8, **caractérisé en ce qu'**il comporte un moyen de pré-orientation (3) vibrant pour mise en ligne des objets permettant de faire tomber la tête la première les objets, ledit moyen de pré-orientation vibrant combinant, d'une part, au moins un canal d'amenée (32) d'objets débouchant (35) sensiblement au-dessus de la zone de réception et des entonnoirs, ledit canal étant sensiblement horizontal ou légèrement incliné et, d'autre part, à une distance prédéterminée du débouché du canal d'amenée, un reposoir (44), destiné à supporter la queue d'un objet dont la tête serait en arrière dans le sens d'amenée des objets et retarder le basculement et la chute de l'objet jusqu'à ce que la tête dudit objet débouche dudit canal, les objets ayant la tête en avant dans le sens d'amenée des objets basculant et tombant directement, et **en ce que** les godets et entonnoirs se déplacent en boucle dans un plan sensiblement vertical ou incliné par rapport à la verticale et le/les canaux d'amenées sont disposés sensiblement perpendiculaires au dit plan.

10. Dispositif selon la revendication 8 ou 9, **caractérisé en ce que** les godets ont leurs faces frontales ouvertes pour permettre l'extraction des objets des godets frontalement, un cache frontal fixe commun disposé le long du moyen d'entraînement en regard des faces frontales ouvertes permettant de fermer fonctionnellement lesdits godets, au moins une ouverture étant réalisée dans le cache au moins au niveau de la zone d'extraction et **en ce que** chacun des entonnoirs est ouvert sur sa face frontale, une plaque frontale fixe commune disposée dans la zone de réception en regard des faces frontales ouvertes permettant de fermer fonctionnellement lesdits entonnoirs situés dans ladite zone de réception et **en ce que** qu'il comporte des moyens (60, 61, 62, 63) permettant, dans une zone de basculement, un basculement de chaque entonnoir après la zone de réception et avant la zone d'extraction afin d'éliminer les objets tombés qui ne seraient pas entrés dans les godets.

## Claims

1. A method for the controlled distribution of objects introduced in bulk, wherein the objects are elongated pieces extending in one direction called the length, having two opposite ends, a lengthwise-offset centre of gravity and a first head end that is wider than a second, thinner, tail end, the centre of gravity being offset toward the head, method in which each object is individually oriented through falling into a conveyor means, the object's head being the first to fall into the conveyor means, which is upwardly open at a receiving area, and then the object is turned over, the conveyor means being turned over at a turnover area, and then the object is extracted from its conveyor means at an extraction area,
**characterized in that** the conveyor means (4) is of the bucket-type, **in that** a set of buckets is implemented and the buckets are made integral with a loop driving means, and **in that** the object is guided during its fall by a funnel (40) arranged in the axis of the bucket opening, wherein each of the buckets is associated with a respective funnel and the funnels are integral with the same loop driving means.

2. A method according to claim 1, **characterized in that** the objects are dropped head-first through a vibrating pre-orientation means (3) for arranging the objects in a line, said vibrating pre-orientation means combining, on the one hand, at least one object-supplying chute (32) ending (35) substantially above the receiving area and the funnels, said chute being substantially horizontal or slightly inclined and, on the other hand, at a predetermined distance from the output of the supplying chute, a rest (44) intended to support the tail of an object whose head would be oriented backward with respect to the object-supply direction and to delay the tilting and fall of the object until the head of said object emerges from said chute, wherein the objects whose head is oriented forward with respect to the object-supply direction tilt and fall directly.

3. A method according to claim 2, **characterized in that** the vibrating pre-orientation means (3) comprises a set of supplying chutes (32) arranged in the same plane and parallel to each other, wherein each chute has an upwardly open V-shape and the chutes extend between a flat-bottom spreading area (30) and the outlet (35) of the supplying chutes.

4. A method according to claim 1, 2 or 3, **characterized in that** the object is held in the bucket by a retaining means, with its head in the bottom of the bucket, up to the extraction area, and **in that** the retaining means is at least one extended fixed blade on which the rear part of the object's head can rest and slide.

5. A method according to any one of the preceding claims, **characterized in that** the objects are stored in bulk in a hopper (20), the objects being supplied from the hopper to the flat-bottom spreading area (30) of the vibrating pre-orientation means (3) by a transfer means (2), and **in that** the hopper is arranged at a height lower than the height of the spreading area of the vibrating pre-orientation means and the transfer means comprises a lifting cleated belt (21) that takes the objects group-by-group from the hopper and that releases them at its upper end at a height higher than that of the spreading area of the vibrating pre-orientation means.

6. A method according to any one of the preceding claims, **characterized in that** the implemented buckets have an open front face to permit frontal extraction of the objects from the buckets, wherein a common fixed front cover (42) arranged along the driving means opposite the open front faces provides the operative closing of said buckets, at least one opening being made in the cover, at least at the extraction area, and **in that** each of the funnels is open in its front face, wherein a common fixed front plate (43) arranged in the receiving area opposite the open front faces provides the operative closing of said funnels located in said receiving area, and **in that** a tilting is brought about at a tilting area by tilting means (60, 61, 62, 63) of each funnel, after the receiving area and before the extraction area, so as to eliminate the fallen objects that would not have correctly entered into the buckets.

7. A method according to any one of the preceding claims, **characterized in that** the implemented driving means is a chain, the chain is split into two homokinetic parallel parts each comprising pins that are opposite by pairs, wherein two adjacent pairs of pins engage with a common support (41) for a bucket and a funnel (40), an end of the common support comprising a fork for receiving and holding an interchangeable bucket permitting an exchange between buckets of different sizes for accommodation of objects of specific shapes and sizes.

8. A device for the controlled distribution of objects introduced in bulk, wherein the objects are elongated pieces extending in one direction called the length, having two opposite ends, a lengthwise-offset centre of gravity and a first head end that is wider than a second, thinner, tail end, the centre of gravity being offset toward the head, in which each object is individually oriented through falling into a conveyor means, the object's head being the first to fall into the conveyor means, which is upwardly open at a receiving area, and then the object is turned over, the conveyor means being turned over at a turnover area, and then the object is extracted from its conveyor means at an extraction area,
**characterized in that** the conveyor means (4) is of the bucket-type, the device comprising a set of buckets, and **in that** the buckets are made integral with a loop driving means and the object is guided during its fall by a funnel (40) arranged in the axis of the bucket opening, wherein each of the buckets is associated with a respective funnel and the funnels are integral with the same loop driving means, and **in that** it comprises a retaining means permitting the object to be held in the bucket with its head in the bottom of the bucket, wherein the retaining means is arranged from the turnover area to at least the extraction area.

9. A device according to claim 8, **characterized in that** it comprises a vibrating pre-orientation means (3) for arranging the objects in a line permitting the objects to be dropped head-first, said vibrating pre-orientation means combining, on the one hand, at least one object-supplying chute (32) ending (35) substantially above the receiving area and the funnels, said chute being substantially horizontal or slightly inclined and, on the other hand, at a predetermined distance from the output of the supplying chute, a rest (44) intended to support the tail of an object whose head would be oriented backward with respect to the object-supply direction and to delay the tilting and fall of the object until the head of said object emerges from said chute, wherein the objects whose head is oriented forward with respect to the object-supply direction tilt and fall directly, and **in that** the buckets and the funnels move according to a loop in a plane substantially vertical or inclined with respect to the vertical, and the supplying chute(s) are arranged substantially perpendicular to said plane.

10. A device according to claim 8 or 9, **characterized in that** the front face of the buckets is open to permit frontal extraction of the objects from the buckets, wherein a common fixed front cover arranged along the driving means opposite the open front faces provides the operative closing of said buckets, at least one opening being made in the cover, at least at the extraction area, and **in that** each of the funnels is open in its front face, wherein a common fixed front plate arranged in the receiving area opposite the open front faces provides the operative closing of said funnels located in said receiving area, and **in that** it comprises means (60, 61, 62, 63) for tilting each funnel, at a tilting area, after the receiving area and before the extraction area, so as to eliminate the fallen objects that would not have correctly entered into the buckets.

## Patentansprüche

1. Verfahren zum kontrollierten Verteilen von Objekten, die als Schüttgut eingebracht werden, wobei die Objekte Teile sind, die sich in eine Länge genannte Richtung erstrecken und mit zwei einander entgegen gesetzten Enden, deren Schwerpunkt in der Länge dezentral ist, und die ein erstes Kopfende aufweisen, das breiter ist als ein zweites, dünneres Schwanzende, wobei der Schwerpunkt zu dem Kopf verlagert ist, wobei man jedes Objekt durch Stürzen in ein Transportmittel einzeln ausrichtet, wobei der Kopf des Objekts zuerst in das Transportmittel, das nach oben offen ist, in einer Aufnahmezone fällt, dass man das Objekt dann umdreht, wobei das Transportmittel in einer Umdrehzone umgedreht wird, man das Objekt dann in einer Extraktionszone aus seinem Transportmittel extrahiert,
**dadurch gekennzeichnet, dass** das Transportmittel (4) Becher hat, und dass man eine Einheit von Bechern verwendet und die Becher mit einem Mittel zum Antreiben in einer Schleife fest verbindet, und dass man das Objekt bei seinem Sturz durch einen Trichter (40) führt, der in der Achse der Öffnung des Bechers angeordnet ist, wobei jeder der Becher einem entsprechenden Trichter zugewiesen ist, und dass die Trichter fest mit dem Mittel zum Antreiben in einer Schleife verbunden sind.

2. Verfahren nach Anspruch 1, **dadurch gekennzeichnet, dass** man den Kopf der Objekte zuerst durch ein schwingendes Vorausrichtmittel (3) zum Ausrichten der Objekte fallen lässt, wobei das schwingende Vorausrichtmittel einerseits mindestens einen Zuführkanal (32) von Objekten aufweist, der im Wesentlichen oberhalb der Aufnahmezone und der Trichter mündet (35), wobei der Kanal im Wesentlichen horizontal oder leicht schräg ist, und, andererseits, in einer vorbestimmten Entfernung von der Mündung des Zuführkanals, und eine Auflage (44) kombiniert, die dazu bestimmt ist, den Schwanz eines Objekts zu tragen, dessen Kopf in die Zuführrichtung der Objekte nach rückwärts gerichtet ist, und das Kippen und das Stürzen des Objekts zu verzögern, bis der Kopf des Objekts aus dem Kanal austritt, wobei die Objekte den Kopf nach vorn in die Zuführrichtung der Objekte haben, die kippen und direkt stürzen.

3. Verfahren nach Anspruch 2, **dadurch gekennzeichnet, dass** das schwingende Vorausrichtmittel (3) eine Einheit von Zuführkanälen (32) aufweist, die in einer gleichen Ebene und untereinander parallel ausgerichtet sind, wobei jeder der Kanäle eine V-Form hat, die nach oben offen ist, wobei sich die Kanäle zwischen einer Streuzone (30) mit flachem Boden und der Mündung (35) der Zuführkanäle erstrecken.

4. Verfahren nach Anspruch 1, 2 oder 3, **dadurch gekennzeichnet, dass** man in dem Becher das Objekt, das seinen Kopf in dem Boden des Bechers hat, bis zu der Extraktionszone durch ein Rückhaltemittel hält, und dass das Rückhaltemittel mindestens eine stationäre gestreckte Klinge ist, auf der der hintere Teil des Kopfs des Objekts liegen und gleiten kann.

5. Verfahren nach einem der vorhergehenden Ansprüche, **dadurch gekennzeichnet, dass** man die Objekte lose in einem Bunker (20) lagert, wobei die Objekte von dem Bunker zu der Streuzone (30) mit flachem Boden des schwingenden Vorausrichtmittels (3) durch ein Transfermittel (2) zugeführt werden, und dass man den Bunker in einer Höhe anordnet, die kleiner ist als die Höhe der Streuzone des schwingenden Vorausrichtmittels, und dass das Transfermittel eine Hebematte (21) mit Leisten aufweist, die Objekte gruppenweise aus dem Bunker entnehmen, und sie an ihrem oberen Ende in einer Höhe abwirft, die größer ist als die der Streuzone des schwingenden Vorausrichtmittels.

6. Verfahren nach einem der vorhergehenden Ansprüche, **dadurch gekennzeichnet, dass** man Becher umsetzt, deren Vorderseite offen ist, um das Extrahieren der Objekte frontal aus den Bechern zu erlauben, wobei es eine gemeinsame stationäre Vorderseitenabdeckung (42), die entlang des Antriebsmittels gegenüber den offenen Vorderseiten angeordnet ist, erlaubt, die Becher funktional zu verschließen, wobei mindestens eine Öffnung in der Abdeckung mindestens auf dem Niveau der Extraktionszone hergestellt ist, und dass jeder der Trichter auf seiner Vorderseite offen ist, wobei es eine gemeinsame stationäre Vorderseitenplatte (43), die in der Aufnahmezone gegenüber den offenen Vorderseiten angeordnet ist, erlaubt, die Trichter, die sich in der Aufnahmezone befinden, funktional zu verschließen, und dass man in einer Kippzone ein Kippen durch Kippmittel (60, 61, 62, 63) jedes Trichters nach der Aufnahmezone und vor der Extraktionszone veranlasst, um die Objekte zu eliminieren, die herunter gefallen aber nicht richtig in die Becher eingetreten sind.

7. Verfahren nach einem der vorhergehenden Ansprüche, **dadurch gekennzeichnet, dass** man ein Antriebsmittel umsetzt, das eine Kette ist, dass die Kette in zwei parallele homokinetische Teile geteilt ist, die jeweils Zapfen aufweisen, die sich einander in Paaren gegenüberliegen, wobei zwei benachbarte Zapfenpaare in einen gemeinsamen Träger (41) für Becher und Trichter (40) eingreifen, wobei ein Ende des gemeinsamen Trägers eine Gabel zum Aufnehmen und Halten eines austauschbaren Bechers zum Austauschen zwischen Bechern mit unterschiedlicher Größe zum Anpassen an Objekte mit spezifischen Formen und Größen aufweist.

8. Vorrichtung zum kontrollierten Verteilen von Objekten, die als Schüttgut eingeführt werden, wobei die Objekte Teile sind, die sich in eine Länge genannte Richtung erstrecken, und mit zwei einander entgegen gesetzten Enden, deren Schwerpunkt in der Länge dezentral ist, und die ein erstes Kopfende aufweisen, das breiter ist als ein zweites, dünneres Schwanzende, wobei der Schwerpunkt zu dem Kopf verlagert ist, wobei das Objekt einzeln durch Stürzen in ein Transportmittel ausgerichtet wird, wobei der Kopf des Objekts zuerst in das Transportmittel, das nach oben offen ist, in einer Aufnahmezone fällt, dass man das Objekt umdreht, wobei das Transportmittel in einer Umdrehzone umgedreht wird, und dass man das Objekt dann in einer Extraktionszone aus seinem Transportmittel extrahiert,
**dadurch gekennzeichnet, dass** das Transportmittel (4) Becher hat, wobei die Vorrichtung eine Einheit von Bechern aufweist und dass die Becher mit einem Mittel zum Antreiben in einer Schleife fest verbunden sind, und dass das Objekt bei seinem Sturz von einem Trichter (40) geführt wird, der in der Achse der Öffnung des Bechers angeordnet ist, wobei jeder Becher einem entsprechenden Trichter zugewiesen ist, und wobei die Trichter fest mit dem Mittel zum Antreiben in einer Schleife verbunden sind, und dass es ein Mittel zum Rückhalten aufweist, das es erlaubt, das Objekt, das seinen Kopf auf dem Boden des Bechers hat, in dem Becher zurückzuhalten, wobei das Rückhaltemittel ausgehend von der Umdrehzone bis mindestens zur Extraktionszone angeordnet ist.

9. Vorrichtung nach Anspruch 8, **dadurch gekennzeichnet, dass** sie ein schwingendes Vorausrichtmittel (3) zum Ausrichten in Linie der Objekte aufweist, das es erlaubt, die Objekte mit dem Kopf zuerst stürzen zu lassen, wobei das schwingende Vorausrichtmittel einerseits mindestens einen Zuführkanal (32) von Objekten, der im Wesentlichen oberhalb der Aufnahmezone und der Trichter mündet (35), wobei der Kanal im Wesentlichen horizontal oder leicht schräg ist, und andererseits in einer vorbestimmten Entfernung von der Mündung des Zuführkanals, mit einer Auflage (44) kombiniert, die dazu bestimmt ist, den Schwanz eines Objekts zu tragen, dessen Kopf in die Zuführrichtung der Objekte nach hinten gerichtet ist, und das Kippen und das Stürzen des Objekts zu verzögern, bis der Kopf des Objekts aus dem Kanal austritt, wobei die Objekte den Kopf in die Zuführrichtung der Objekte nach vorn haben, kippen und direkt stürzen, und dass sich die Becher und Trichter in einer Schleife in einer Ebene im Wesentlichen senkrecht oder schräg zu der Vertikalen bewegen, und dass der oder die Zuführkanäle im Wesentlichen senkrecht zu der Ebene ausgerichtet sind.

10. Vorrichtung nach Anspruch 8 oder 9, **dadurch gekennzeichnet, dass** die Becher an der Vorderseite offen sind, um das Extrahieren der Objekte aus den Bechern frontal zu erlauben, wobei eine gemeinsame stationäre Vorderseitenabdeckung entlang des Antriebsmittels gegenüber den offenen Vorderseiten angeordnet ist und es erlaubt, die Becher funktional zu schließen, wobei mindestens eine Öffnung in der Abdeckung auf mindestens der Ebene der Extraktionszone hergestellt ist, und dass jeder der Trichter auf seiner Vorderseite offen ist, wobei es eine gemeinsame stationäre Vorderseitenplatte, die in der Aufnahmezone gegenüber den offenen Vorderseiten angeordnet ist, erlaubt, die Trichter, die sich in der Aufnahmezone befinden, funktional zu schließen, und dass sie Mittel (60, 61, 62, 63) aufweist, die in einer Kippzone ein Kippen jedes Trichters nach der Aufnahmezone und vor der Extraktionszone erlauben, um die Objekte zu eliminieren, die abgestürzt und nicht in die Becher eingetreten sind.
